**Europäisches Patentamt**

**European Patent Office**

**Office européen des brevets**

(19)

(11) Veröffentlichungsnummer : **0 065 585 B2**

# (12) NEUE EUROPÄISCHE PATENTSCHRIFT

(45) Veröffentlichungstag der neuen Patentschrift :
**17.04.91 Patentblatt 91/16**

(51) Int. Cl.⁵ : **H02K 5/16**

(21) Anmeldenummer : **81104012.0**

(22) Anmeldetag : **25.05.81**

(54) **Verfahren zur Einstellung des Axialspiels zwischen dem Rotor und den am Stator befestigten Lagern eines Elektromotors.**

Die Akte enthält technische Angaben, die nach dem Eingang der Anmeldung eingereicht wurden. und die nicht in dieser Patentschrift enthalten sind.

(43) Veröffentlichungstag der Anmeldung :
**01.12.82 Patentblatt 82/48**

(45) Bekanntmachung des Hinweises auf die Patenterteilung :
**13.03.85 Patentblatt 85/11**

(45) Bekanntmachung des Hinweises auf die Entscheidung über den Einspruch :
**17.04.91 Patentblatt 91/16**

(84) Benannte Vertragsstaaten :
**AT DE FR GB IT**

(56) Entgegenhaltungen :
**DE-B- 1 178 934**
**DE-B- 1 463 968**
**DE-B- 1 538 921**
**DE-U- 1 751 279**
**DE-U- 1 838 776**
**DE-U- 1 987 223**
**AEG-Unterlagen zu offenkundiger Vorbenutzung gemäss Einspruch vom 28./30.11.85**

(73) Patentinhaber : **Siemens Aktiengesellschaft**
**Wittelsbacherplatz 2**
**W-8000 München 2 (DE)**

(72) Erfinder : **Adam, Peter**
**Allerseeweg 25**
**W-8706 Hochberg (DE)**
Erfinder : **Wehner, Ewald**
**Flürleinstrasse 12**
**W-8700 Würzburg (DE)**
Erfinder : **Schilling, Werner**
**Untere Goldbergstrasse 20**
**W-8700 Würzburg (DE)**

EP 0 065 585 B2

**Beschreibung**

Die Erfindung bezieht sich auf ein Verfahren zur Einstellung des Axialspiels zwischen dem Rotor und den am Stator befestigten Lagern eines Elektromotors gemäß Oberbegriff des Anspruches 1.

Durch eine geltend gemachte offenkundige Vorbenutzung ist es bekannt, zur Einstellung des Axialspiels zwischen dem Rotor und den am Stator befestigten Lagern eines Elektromotors in einen axial vorstehenden Kragen einer am Rotorblechpaket stirnseitig anliegenden Isolierscheibe eine Ausnehmung vorzusehen und eine Distanzbuchse entsprechend dem gewünschten Axialspiel mehr oder weniger axial tief in die Ausnehmung einzuschieben.

In einer durch die DE-B-1 178 934 bekannten Einrichtung ist als Distanzbuchse eine Hülse mit konischem Hals vorgesehen, die als getrenntes Bauteil bei der Montage des zur Anlage kommenden Lagerbügels zunächst allein im Preßsitz auf der Rotorwelle verschieblich angeordnet ist und bei der Einstellung des Axialspiels unter weiterem Axialdruck zusätzlich um das Maß des Axialspiels in eine im Rotorblechpaket vorgesehene Ausnehmung einpreßbar ist.

Da erkannt wurde, daß sich die Distanzbuchse z.B. aufgrund von Stoßbelastungen oder Erwärmung des Blechpakets in ihrem Preßsitz lockern und über das zusätzliche Maß des Axialspiels verschieben kann, wurde in einer späteren Schutzrechtsanmeldung (DE-B-1 538 921) vorgeschlagen, einen Zwischenraum zwischen der Distanzbuchse und der Ausnehmung vorzusehen und den Zwischenraum durch eine selbsthärtende und volumenbeständige, jedoch während des Einstellvorganges des Axialspiels elastische Masse auszufüllen, die nach ihrer Aushärtung die Distanzbuchse in ihrer Einstellage sicherer fixiert. Im praktischen Ausführungsbeispiel ist die Ausnehmung im Rotor dabei innerhalb des einen stirnseitigen Kurzschlußringes vorgesehen.

Aufgabe der vorliegenden Erfindung ist es, eine Einstellung des Axialspiels zu ermöglichen, die den Fertigungs- und Montageaufwand wesentlich mindert und trotzdem eine gegen Erschütterungen und Wärmespannungen sichere Halterung der Distanzbuchse und somit eine Gewährleistung des gewünschten Axialspiels auch in rauhem Betrieb und über lange Betriebszeiten sicherstellt.

Die Lösung dieser Aufgabe gelingt bei einem Verfahren der eingangs genannten Art erfindungsgemäß durch die kennzeichnende Lehre des Anspruches 1.

Die Gegenstände der Unteransprüche kennzeichnen vorteilhafte Ausgestaltungen dieses Verfahrens.

Durch die erfindungsgemäße Einrichtung ist es in fertigungs- und montagetechnisch günstiger Weise möglich, die Distanzbuchse, z.B. bei der Herstellung der Isolierendscheibe, gleichzeitig in deren Ausnehmung vorzumontieren, als ein einstückiges Bauteil mit anzuliefern und bei der Montage des Elektromotors vor dem Bewickeln des Läufers in einem Arbeitsgang mitaufzuschieben ; gleichzeitig ist damit sichergestellt, daß auf keinen Fall das Aufsetzen der zur Einstellung des Axialspiels unbedingt notwendigen Distanzbuchse bei der Serienfertigung des Elektromotors vergessen wird. Da die Distanzbuchse sowohl gegenüber der Rotorwelle als auch gegenüber dem äußeren Kragen im Preßsitz gehalten wird, kann der Preßsitz-Druck auf die Rotorwelle geringer als bei bekannten Lösungen gehalten und somit die Gefahr von Schabe-Beschädigungen der geschliffenen Rotorwelle beim Aufschieben der Distanzbuchse wesentlich gemindert werden. Da weiterhin bei der erfindungsgemäßen Einrichtung die zweckmäßigerweise wie die Isolierendscheibe aus dem gleichen Kunststoff hergestellte, insbesondere gespritzte Distanzbuchse zu einem nicht unwesentlichen Teil durch eine Preßsitzhalterung in dem umfassenden Kragen gesichert wird, können sich Wärmespannungen nur wesentlich geringer ungünstig auswirken als in bekannten Fällen, bei denen die Distanzbuchsen ausschließlich im Preßsitz gegenüber Metallteilen gehalten sind, die einen wesentlich größeren Ausdehnungskoeffizienten als Kunststoff aufweisen.

Kunststoff-Isolierendscheiben mit axial angeformtem Kragen sind an sich bekannt (DE-U-1838 776, Fig. 3). Der Kragen hat dabei insbesondere die Aufgabe, die unmittelbar an der Stirnseite des Rotorblechpaketes anliegende eigentliche Isolierendscheibe zusätzlich abzustützen und gleichzeitig den Wickelkopf gegenüber der Läuferwelle zusätzlich zu isolieren. Die radiale Wandstärke des Kragens ist dabei relativ gering. Irgendwelche Hinweise auf die erfindungsgemäße Doppelausnutzung einer solchen Isolierendscheibe mit Kragen als Isolierteil einerseits und als Preßsitzhalterung einer vormagazinierbaren Distanzbuchse zur Axialspieleinstellung andererseits ist im bekannten Fall nicht zu entnehmen ; eine solche Doppelnutzung bietet sich aufgrund der Funktion und der konstruktiven Gestaltung der bekannten Isolierendscheiben auch nicht ohne weiteres an.

Die Erfindung sowie weitere vorteilhafte Ausgestaltungen werden im folgenden anhand eines schematisch dargestellten Ausführungsbeispiels in der Zeichnung näher erläutert. Darin zeigen :

Figur 1 einen Längsschnitt durch einen Dauermagnet-Kommutatormotor,

Figur 2 einen vergrößerten Detailausschnitt aus Fig. 1 im Bereich der rechten Isolierendscheibe.

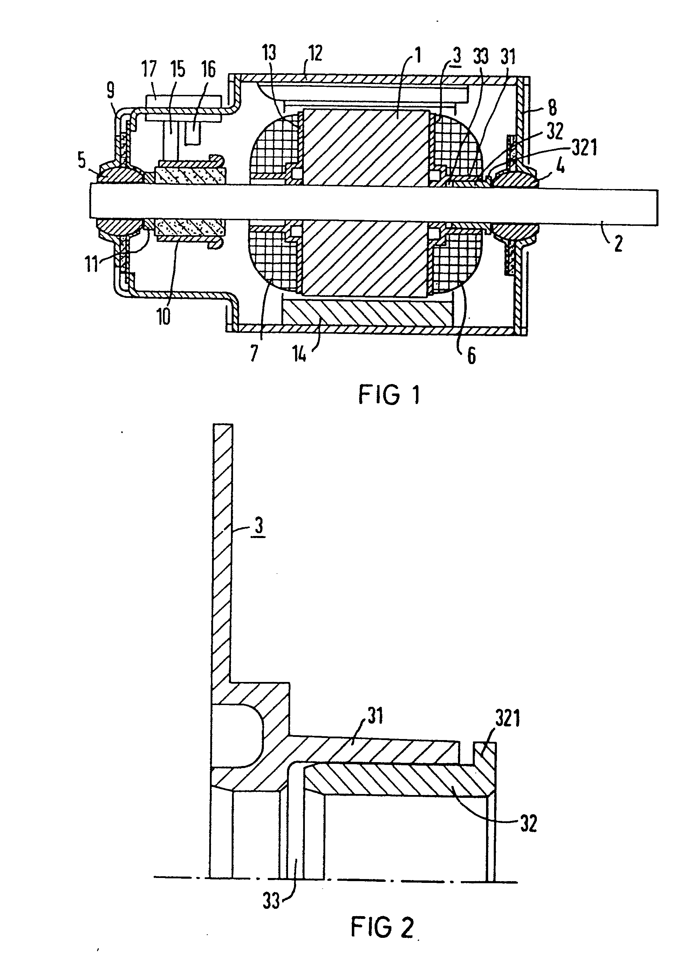

Fig. 1 zeigt einen Dauermagnet-Kommutatormotor. An der Innenumfangsfläche des Statorgehäuses 12 sind das Magnetfeld erzeugende Dauermagnete 14 angeordnet. Stirnseitig sind am Statorgehäuse 12 Lagerbügel 8, 9 befestigt. Die Lagerbügel 8, 9 nehmen Kalottenlager 4, 5 auf, in denen eine Rotorwelle 2 drehbar gelagert ist. Auf die Rotorwelle 2 ist ein Rotorblechpaket 1 z.B. im Preßsitz gehalten. Auf dem linken Wellenende der Rotorwelle 2 ist innerhalb des Gehäuses ein Kommutator 10 aufgeklebt. Hammer-Bürstenhalter 15, 16 sind in hier nicht näher dargestellter Weise in einer statorgehäusefesten Bürstenbrücke 17 gelagert und mit der äußeren Anschlußleitung verbunden. An die Lamellen des Kommutators 10 sind die Wicklungsenden der gewickelten Rotorwicklung angeschlossen, von der in Fig. 1 die stirnseitigen Wickelköpfe 6, 7 dargestellt sind.

Zur elektrischen Isolierung der Wickelköpfe 6, 7 gegenüber den Stirnseiten des Rotorblechpaketes 1 und gegenüber der Rotorwelle 2 sind Kunststoff-Isolierendscheiben 3, 13 mit je einem axial angeformten und zumindest im Bereich der Wickelköpfe die Rotorwelle 2 übergreifenden Kragen vorgesehen. Die rechte Isolierendscheibe 3 wird darüber hinaus nicht nur zur Isolierung der Wicklung gegenüber dem Rotorblechpaket 1 und der Rotorwelle 2 sondern in erfindungsgemäßer Weise auch zur Axialspieleinstellung mittels einer Distanzbuchse 32 mitbenutzt. Die Ausgestaltung der Isolierendscheibe 3 und insbesondere des an diese Isolierendscheibe 3 angeformten axialen Kragen sowie der in diesem Kragen erfindungsgemäß gehalterten Distanzbuchse 32 ist in dem Detailausschnittbild gemäß Fig. 2 deutlicher herausgestellt. Zur Typenvereinheitlichung ist an der linken Seite des Rotorblechpaketes 1 der gleiche Typ einer Isolierendscheibe benutzt, obwohl hier eine Distanzbuchse im vorliegenden Fall nicht vorgesehen ist.

Der axial angeformte Kragen 31 der Isolierendscheibe 3 weist eine zur Rotorwelle 2 konzentrische innere Ausnehmung 33 auf, in die die Distanzbuchse 32 eingepreßt ist. In vorteilhafter Weise ist vorgesehen, daß bei der Herstellung der Isolierendscheibe 3 gleichzeitig die Distanzbuchse 32 mitgefertigt und bereits durch Einpressen bis zu einer bestimmten axialen Tiefe in die Ausnehmung 33 im Sinne eines einheitlichen Bauteils vorgefügt ist.

Zur Vergrößerung der Anlagefläche zwischen der Kalotte 4 und der Distanzbuchse 32 weist diese an ihrer der Kalotte 4 zugewandten Stirnseite eine radial überkragende Schulter 321 auf. Beim Aufdrücken der Isolierendscheibe 3 mit der vorgefügten Distanzbuchse 32 drückt das entsprechende Werkzeug gleichartig auf die Stirnseite der Isolierendscheibe 3 als auch der Distanzbuchse 32. Nach der Montage des Lagerbügels 8 kann ein eventuell zu geringes axiales Spiel durch bekannte, z.B. in der eingangs genannten Druckschrift beschriebene, Maßnahmen vergrößert werden.

Selbstverständlich ist darauf zu achten, daß beim Vorfügen die Distanzbuchse 32 nur so weit in die Ausnehmung 33 des Kragens 31 eingeschoben wird, daß die verbleibende Einschubstrecke zumindest so groß ist, daß bei der endgültigen Montage des Lagerbügels 8 an der rechten Stirnseite des Statorgehäuses 12 die Distanzbuchse 32 unter Berücksichtigung des gewünschten einzuhaltenden Axialspiels in die Ausnehmung 33 des Kragens 31 der Isolierendscheibe 3 eindrückbar ist.

Im einzelnen ist ein erfindungsgemäßes Verfahren zur Einstellung des Axialspiels des in Fig. 1 dargestellten Motors durch folgende aufeinanderfolgende Montageschritte gekennzeichnet:

a) Aufdrücken der Isolierendscheibe mit der in der Ausnehmung unter Preßsitz vorgefügt gehaltenen Distanzbuchse über das eine Ende der Rotorwelle bis zum Anliegen der Isolierendscheibe an der einen Stirnseite des Blechpaketes; dabei liegt das Druckwerkzeug zweckmäßigerweise gleichzeitig sowohl an der Isolierendscheibe als auch an der Distanzbuchse an,

b) nach Aufschieben einer Isolierendscheibe auf die andere Stirnseite des Blechpaketes und gegebenenfalls nach Aufkleben eines Kommutators auf das über diese Stirnseite vorstehende andere Wellenende der Rotorwelle Bewickeln des Rotors,

c) Einsetzen des bewickelten Rotors in das Lager des mit dem Stator verbundenen ersten Lagerbügels,

d) Aufsetzen des zweiten Lagerbügels und dabei durch Axialdruck gleichzeitiges Verschieben der sowohl zur Rotorwelle als auch zum Kragen der Isolierendscheibe im Preßsitz gehaltenen Distanzbuchse,

e) gegebenenfalls Feineinstellung des Axialspiels zwischen Distanzbuchse und Lager des zweiten Lagerbügels.

## Ansprüche

1. Verfahren zur Einstellung des Axialspiels zwischen dem Rotor und den am Stator befestigten Lagern eines Elektromotors, bei welchem eine auf die Rotorwelle (2) aufgedrückte, unter axialem Druck verschiebbare Distanzbuchse (32) zumindest teilweise in eine Ausnehmung (33) eines axial vorstehenden, an eine stirnseitig gegen das Rotorblechpaket (1) anliegende Isolierendscheibe (3) angeformten und die Rotorwelle (2) umfassenden Kragens (31) eingeschoben wird, **gekennzeichnet** durch folgende Montageschritte,

a) Aufdrücken der Isolierendscheibe (3) mit der in der Ausnehmung (33) unter Preßsitz vorgefügt gehaltenen Distanzbuchse (32) über das eine Ende der Rotorwelle (2) bis zum Anliegen der Isolierendscheibe (3) an der einen Stirnseite des Rotorblechpaketes (1),

b) Bewickeln des Rotors nach Aufschieben einer Isolierendscheibe (13) auf die andere Stirnseite des Rotorblechpaketes (1) und gegebenenfalls nach Aufkleben eines Kommutators (10) auf das über diese Stirnseite vorstehende andere Wellenende der Rotorwelle (2),

c) Einsetzen des bewickelten Rotors in das Lager (Kalottenlager 5) des mit dem Stator verbundenen ersten Lagerbügels (9),

d) Aufsetzen des zweiten Lagerbügels (8) und dabei durch Axialdruck gleichzeitiges Verschieben der sowohl zur Rotorwelle (2) als auch zum Kragen (31) der Isolierendscheibe (3) im Preßsitz gehaltenen Distanzbuchse (32),

e) gegebenenfalls Feineinstellung des Axialspiels zwischen Distanzbuchse und Lager des zweiten Lagerbügels.

2. Verfahren nach Anspruch 1, **dadurch gekennzeichnet**, daß bei einem Kommutatormotor die Ausnehmung (33) im Kragen (31) der auf der dem Kommutator (10) abgewandten Stirnseite des Rotorblechpaketes (1) anliegenden Isolierendscheibe (3) vorgesehen wird.

3. Verfahren nach Anspruch 2, **dadurch gekennzeichnet**, daß die Distanzbuchse (32) ebenso wie die Isolierendscheibe (3) mit dem angeformten Kragen (31) als, insbesondere spritzgegossenes, Kunststoffteil ausgebildet werden.

## Claims

1. Method for adjusting the axial clearance between the rotor and the bearings which are secured to the stator of an electric motor, in which a spacing bush (32), which is pressed onto the rotor shaft (2) and can be displaced under axial pressure, is pushed at least in part into a recess (33) of an axially projecting collar (31) which is integral with an insulating disc (3) resting against the face of the laminated rotor core (1) and surrounds the rotor shaft (2), characterised by the following assembly steps :

a) pressing the insulating disc (3) with the spacing bush (32), which is held in a pre-joined manner in the recess (33) with press fit, over the one end of the rotor shaft (2) until the insulating disc (3) rests against the one face of the laminated rotor core (1) ;

b) winding the rotor, after an insulating disc (13) has been slid onto the other face of the laminated rotor core (1) and, if applicable, after affixing a commutator (10) onto the other shaft end of the rotor shaft (2) which projects over this face ;

c) inserting the wound rotor into the bearing (spherical cap-shaped bearing 5) of the first bearing stay (9) which is connected with the stator ;

d) placing the second bearing stay (8) thereon and thereby as a result of axial pressure simultaneously displacing the spacing bush (32) which is held in press fit both in relation to the rotor shaft (2) and in relation to the collar (31) of the insulating disc (3) ;

e) if applicable, finely adjusting the axial clearance between spacing bush and bearing of the second bearing stay.

2. Method according to claim 1, characterised in that in the case of a commutator motor the recess (33) is provided in the collar (31) of the insulating disc (3) resting on the face of the laminated rotor core (1) remote from the commutator (10).

3. Method according to claim 2, characterised in that the spacing bush (32) is formed in the same way as the insulating disc (3) with the collar (31), which is integral therewith, as a plastics portion which is, in particular, injection moulded.

## Revendications

1. Procédé pour régler le jeu axial entre le rotor et les paliers (4, 5) fixés sur le stator d'un moteur électrique, dans lequel un manchon-entretoise (32), emmanché par pression sur l'arbre (2) du rotor et pouvant être déplacé sous une pression axiale, est inséré au moins partiellement dans un évidement (33) d'un collet (31) entourant l'arbre du rotor (2), faisant saillie axialement et issu d'un disque isolant (3) appliqué du côté frontal sur le paquet (1) de tôles du rotor, caractérisé par les phases opératoires suivantes :

a) on emmanche par pression le disque isolant (3) muni du manchon-entretoise (32) préalablement maintenu selon un ajustement serré dans l'évidement (33), sur une extrémité de l'arbre du rotor (2) jusqu'à ce qu'il vienne s'appliquer contre une face frontale du paquet (1) de tôles du rotor,

b) on réalise le bobinage du rotor après avoir emmanché un disque isolant (13) sur l'autre face frontale du paquet (1) de tôles du rotor et éventuellement après avoir collé un collecteur (10) sur l'autre extrémité de l'arbre du rotor (2), faisant saillie sur cette face frontale,

c) on met en place le rotor bobiné dans le palier (palier sphérique 5) du premier étrier de support (9) relié au stator,

d) on monte le second étrier de support (8) et on déplace simultanément, sous l'action d'une pression axiale, le manchon-entretoise (32) maintenu selon un ajustement serré aussi bien par rapport à l'arbre du rotor (2) que par rapport au collet (31) du disque isolant (3),

e) éventuellement, on réalise un réglage précis du jeu axial entre le manchon-entretoise et le palier du second étrier de support.

2. Procédé suivant la revendication 1, caractérisé par le fait que, dans le cas d'un moteur à collecteur, l'évidement (33) est prévu dans le collet (31) du disque isolant (3) appliqué contre la face frontale, tournée à l'opposé du collecteur (10), du paquet (1) de tôles du rotor.

3. Procédé suivant la revendication 2, caractérisé par le fait que le manchon-entretoise (32), tout comme le disque isolant (3) muni d'un seul tenant du collet (31), sont réalisés sous la forme d'une pièce en matière plastique, notamment moulée par injection.

FIG 1

FIG 2